# EUROPÄISCHE PATENTSCHRIFT

(11) **EP 1 687 553 B1**
(45) Veröffentlichungstag und Bekanntmachung des Hinweises auf die Patenterteilung: **15.08.2007**
(21) Anmeldenummer: 04819580.4
(22) Anmeldetag: 09.11.2004
(51) Int. Cl.: F16H 55/17, F16D 1/00, F04D 29/12

(54) **ANTRIEBSVORRICHTUNG**
DRIVE DEVICE
DISPOSITIF D'ENTRAINEMENT

(30) Priorität: 24.11.2003 DE 10355113
(43) Veröffentlichungstag der Anmeldung: 09.08.2006
(73) Patentinhaber: Schaeffler KG, 91074 Herzogenaurach (DE)
(72) Erfinder: MAUSE, Elmar, 91448 Emskirchen (DE); TRAUDT, Thomas, 91257 Pegnitz (DE)
(86) Internationale Anmeldenummer: PCT/EP2004/012638
(87) Internationale Veröffentlichungsnummer: WO 2005/054714

(56) Entgegenhaltungen:
- DE-A1- 3 536 331
- DE-A1- 3 805 777
- DE-B1- 1 575 887
- US-A- 3 796 507

## Beschreibung

Die vorliegende Erfindung betrifft eine Vorrichtung zum Antrieb eines Aggregates einer Brennkraftmaschine entsprechend dem Oberbegriff des Anspruchs 1. Dazu ist ein Zahnradantrieb zwischen einem Abtriebsglied, insbesondere der Kurbelwelle der Brennkraftmaschine und dem anzutreibenden Aggregat, einem Antriebsglied, vorgesehen. Das ortsfest mit der Brennkraftmaschine verbundene Aggregat schließt eine wälzgelagerte Antriebswelle ein, die drehstarr mit einem Rotationskörper verbunden ist.

### Hintergrund der Erfindung

Aus der gattungsgemäßen US 3,796,507 ist eine für Brennkraftmaschinen bestimmte Wasserpumpe bekannt, die zur Umwälzung eines Kühlmediums zur Kühlung der -Brennkraftmaschine bestimmt ist. Die bekannte Wasserpumpe umfasst ein Gehäuse, das bevorzugt an der Brennkraftmaschine angeflanscht ist und damit ortsfest mit der Brennkraftmaschine in Verbindung steht. In dem Gehäuse der Wasserpumpe ist eine wälzgelagerte Antriebswelle integriert, die an einem Ende mit einem Flügelrad verbunden ist, das durch Rotation eine Umwälzung des Kühlmittels in dem Kühlmittelkreislauf sicherstellt. An dem gegenüberliegenden Ende ist die Antriebswelle unmittelbar mit einem Zahnrad verbunden, das im eingebauten Zustand in einen Zahnradtrieb eingreift, wobei der Abtrieb vorzugsweise über die Kurbelwelle der Brennkraftmaschine erfolgt. Dieser bekannte Antrieb hat zur Folge, dass bedingt durch die Drehungleichförmigkeit der Brennkraftmaschine aufgrund des Verbrennungsprozesses, der Zahnradantrieb hochfrequenten dynamischen Wechselbeanspruchungen bzw. Wechselmomenten ausgesetzt ist, die sich aufgrund der starren Befestigung des Zahnrades unmittelbar auf die Antriebswelle der Wasserpumpe übertragen. Diese Schwingungsanregungen belasten insbesondere die in Wasserpumpen eingesetzten Gleitring-Dichtungen sowie die Flügelräder, die zu vorzeitigen Ausfällen der Wasserpumpe führen.

### Zusammenfassung der Erfindung

Die Nachteile der bekannten Lösung berücksichtigend, liegt der Erfindung die Aufgabe zugrunde, eine Vorrichtung zum Antrieb eines Aggregates zu realisieren, die einen wirksamen entkoppelten Antrieb sicherstellt.

Diese zuvor genannte Problemstellung wird durch die Merkmale von Anspruch 1 gelöst.

Gemäß der Erfindung schließt das anzutreibende Aggregat eine Antriebsvorrichtung ein, bei der ein über ein Stützlager wälzgelagertes Zahnrad die Antriebswelle radial beabstandet umschließt. Weiterhin ist erfindungsgemäß die Antriebswelle mit einer Mitnehmerscheibe verbunden, die mittelbar oder unmittelbar über zumindest ein elastisches, formschlüssiges Mitnehmerprofil mit dem Zahnrad zusammenwirkt.

Das dem Zahnrad zugeordnete Stützlager ermöglicht vorteilhaft dient zur Einleitung bzw. zur Aufnahme der hochdynamischen Zahnradkräfte. Zum Antrieb, d. h. zur Drehmomentübertragung von dem Zahnrad auf die Antriebswelle dient erfindungsgemäß die Mitnehmerscheibe, wobei die Übertragung des Antriebsdrehmomentes zwischen dem Zahnrad und der Mitnehmerscheibe über ein elastisches Mitnehmerprofil erfolgt.

Der erfindungsgemäße Aufbau umfasst weiterhin für die drehstarr mit der Antriebswelle verbundene Mitnehmerscheibe eine unmittelbare Verbindung mit dem Zahnrad. Alternativ schließt die Erfindung eine dem Stützlager zugeodnete Mitnehmerscheibe ein, wodurch sich eine mittelbare Verbindung zwischen dem Zahnrad und der Mitnehmerscheibe einstellt.

Durch das erfindungsgemäß separat von der Antriebswelle wälzgelagerte Zahnrad, wird die Antriebswelle von nachteiligen störenden äußeren Belastungen verschont. Für die Lagerung der Antriebswelle kann folglich ein vorteilhaft klein dimensioniertes Wälzlager eingesetzt werden, das einen Kostenvorteil aufweist und gleichzeitig eine verbesserte Laufgenauigkeit der Antriebswelle sicherstellt. In Verbindung mit dem elastischen Mitnehmerprofil der Mitnehmerscheibe verringert dieses Lagerkonzept vorteilhaft Störgrößen. Die erfindungsgemäßen Maßnahmen stellen eine deutliche Verbesserung der Gebrauchseigenschaften, der Zuverlässigkeit und damit der Lebensdauer der gesamten Lagerung der Antriebswelle und des damit in Verbindung stehenden Aggregates dar. Die Mitnehmerscheibe sowie deren Mitnehmerprofile kompensieren vorteilhaft die hochdynamischen Zahnradkräfte und ermöglichen dabei die Verwendung kostengünstiger Materialien bzw. Bauteile des drehstarr mit der Antriebswelle verbundenen Rotationskörpers, insbesondere eines aus Kunststoff hergestellten Flügelrades.

Für Brennkraftmaschinen, die zum Antrieb von Aggregaten einen Zahnradtrieb vorsehen, verursacht die Drehungleichförmigkeit der Brennkraftmaschine eine hohe Dynamik des Zahneingriffs. In Verbindung mit daraus resultierenden Schwingungsanregungen ergibt sich häufig ein vorzeitiger Bauteilausfall. Um diese Ausfälle zu vermeiden, wurden bislang überdimensionierte Wälzlager und Antriebswellen eingesetzt, verbunden mit einem höheren Materialeinsatz, einem erhöhten Eigengewicht und einer Kostensteigerung.

Die erfindungsgemäßen Maßnahmen stellen eine wirksame, die zuvor genannten Nachteile vermeidende Lösung der Problemstellung dar. Die Mitnehmerscheibe in Verbindung mit dem elastischen Mitnehmerprofil bildet eine Entkopplungseinheit, die Kraftspitzen aus der Dynamik des Zahnradantriebes in Verbindung mit dem Stützlager aufnimmt bzw. kompensiert. Damit kann vorteilhaft die torsionale Antriebsbewegung nahezu schwingungsfrei auf die Antriebswelle des Aggregates sowie den nachgeschalteten Bauteilen, insbesondere des Rotationskörpers überträgen werden. Im Vergleich zu den bisher groß dimensionierten Bauteilen ist der erforderliche Bauraumbedarf für die erfindungsgemäß, ein Stützlager aufweisende Vorrichtung zum Antrieb des Aggregates nahezu unverändert. Die Mitnehmerscheibe sowie das elastische Mitnehmerprofil ist weiterhin vorteilhaft dauerhaft beständig gegenüber Öl sowie gegenüber hohen Temperaturen, so dass die erfindungsgemäße Antriebsvorrichtung für ein großes Anwendungsspektrum einsetzbar ist.

Weitere vorteilhafte Ausgestaltungen sind Gegenstand der abhängigen Ansprüche 2 bis 18.

Vorzugsweise ist die erfindungsgemäße Vorrichtung bestimmt zum Antrieb einer Wasserpumpe, die für die Zirkulation eines Kühlmediums in einem Kühlmittelkreislauf einer Brennkraftmaschine bestimmt ist. Eine Wasserpumpe, die mit der erfindungsgemäßen Mitnehmerscheibe, dem elastischen Mitnehmerprofile sowie dem Stützlager versehen ist, kann bevorzugt mit einem aus Kunststoff hergestellten, drehstarr mit der Antriebswelle in Verbindung stehenden Flügelrad aus Kunststoff in einer geschlossenen Bauart kombiniert werden.

Eine vorteilhafte Ausgestaltung der Erfindung sieht vor, dass die Mitnehmerscheibe eine Verbindung zwischen dem äußeren Lagerring des Stützlagers und der Antriebswelle sicherstellt. Diese Maßnahme bietet sich an für einen Aufbau, bei dem die Montagefolge zunächst die Befestigung des Stützlagers im Gehäuse des anzutreibenden Aggregates vorsieht, bevor das Zahnrad auf das Stützlager montiert wird. Dabei ist der äußere drehstarr mit dem Zahnrad in Verbindung stehende Lagerring des Stützlagers über Mitnehmerprofile mit der Mitnehmerscheibe verbunden.

Alternativ schließt die Erfindung einen Aufbau ein, bei dem die innenseitig mit der Antriebswelle des Aggregates verbundene Mitnehmerscheibe unmittelbar über Mitnehmerprofile an dem Zahnrad befestigt ist. Dieser Aufbau ermöglicht eine im Durchmesser vergrößerte Mitnehmerscheibe, wodurch die Bauteilelastizität der Mitnehmerscheibe nutzbar ist, die den Entkopplungsprozess zwischen dem Zahnrad und der Antriebswelle weiter verbessert.

Den Kostenvorteil nutzend, sowie zur Erzielung einer Gewichts- und Bauteiloptimierung, ist erfindungsgemäß eine aus Blech geformte Mitnehmerscheibe vorgesehen, die innenseitig drehstarr, bevorzugt kraftschlüssig mit der Antriebswelle verbunden ist und außenseitig über elastische Mitnehmerprofile formschlüssig an dem Zahnrad oder dem äußeren Lagerring des Stützlagers befestigt ist. Eine vereinfachte Montage sieht vor, die Mitnehmerscheibe mittels einer Presspassung, einem Pressverband, an der Antriebswelle zu befestigen. Außerdem schließt die Erfindung eine formschlüssige Befestigung der Mitnehmerscheibe an der Antriebswelle ein, oder eine Antriebsvorrichtung, bei der die Mitnehmerscheibe an der Antriebswelle verschraubt ist.

Für die erfindungsgemäße Vorrichtung zum Antrieb eines Aggregates ist das zugehörige separate Zahnrad in vorteilhafter Weise dem Gehäuse des Aggregates zugeordnet. Das Gehäuse ist dabei mit einem stirnseitigen zylindrischen Ansatz und einer sich daran anschließenden Schulter versehen, auf dem der innere Lagerring des Stützlagers geführt und lagepositioniert ist und damit gleichfalls das Stützlager, wobei das Zahnrad das Stützlager außenseitig umschließt.

Ein bauteiloptimierte, kompakte Bauweise der erfindungsgemäßen Antriebsvorrichtung sieht eine Kombination zwischen dem Stützlager und dem Wälzlager der Antriebswelle vor. Dazu ist das in dem Gehäuse des Aggregates, insbesondere der Wasserpumpe positionierte Wälzlager der Antriebswelle mit einem eine Doppelfunktion ausübenden äußeren Lagerring versehen. Die Mantelfläche dieses Lagerrings bildet gleichzeitig eine Laufbahn für die Wälzkörper des Stützlagers. Dazu ist das Antriebswellen-Wälzlager stirnseitig mit einem zylindrischen Ansatz versehen, welcher außenseitig eine Laufbahn für die Wälzkörper des Stützlagers aufweist. Damit stellt sich ein weiterer Vorteil der erfindungsgemäßen entkoppelten Vorrichtung ein.

Das Zahnrad, welches das Stützlager außenseitig umschließt und dabei drehstarr mit dem äußeren Lagerring des Stützlagers verbunden ist, kann gemäß der Erfindung als ein Zahnkranz gestaltet werden mit einer vorteilhaft geringen Bauhöhe. Zur Fixierung des Zahnkranzes oder des Zahnrades bietet es sich an, dieses Bauteil einseitig mit einem radial nach innen gerichteten Bord zu versehen, der einen Axialanschlag für den äußeren Lagerring des Stützlagers bildet. Gegenseitig von dem Bord ist in der Aufnahmebohrung des Zahnrades oder des Zahnkranzes eine umlaufende Ringnut für einen Sicherungsring eingebracht, der das Stützlager gegenseitig gegenüber dem Zahnrad oder dem Zahnkranz axial lagefixiert.

Als Werkstoff für die Mitnehmerscheibe ist bevorzugt ein Federstahl vorgesehen. Die gewünschte erfindungsgemäße Entkopplung der Antriebsvorrichtung kann ebenfalls mit einer aus Stahlblech hergestellten Mitnehmerscheibe erfolgen. Unabhängig von dem Werkstoff bietet es sich bevorzugt an, die Mitnehmerscheibe spanlos, insbesondere durch ein Tiefziehverfahren herzustellen.

Die Elastizität der Mitnehmerscheibe verbessernd, kann diese erfindungsgemäß mit symmetrisch umfangsverteilt angeordneten, radial ausgerichteten Schlitzen oder Aussparungen versehen werden. Diese Maßnahme kann alternativ oder in Ergänzung mit dem elastischen Mitnehmerprofil zwischen der Mitnehmerscheibe und dem äußeren Lagerring des Stützlagers oder dem Zahnrad vorgesehen werden.

Die Erfindung schließt weiterhin eine Vielzahl von elastischen Mitnehmerprofilen ein. Beispielsweise kann eine Außenprofilierung der Mitnehmerscheibe so gestaltet werden, dass diese in der Einbaulage formschlüssig in ein korrespondierendes, zu dem Stützlager axial versetztes Innenprofil des Zahnrades oder des Zahnkranzes eingreift.

Eine weitere Ausgestaltung zur Darstellung des Mitnehmerprofils sieht vor, den äußeren Lagerring des Stützlagers oder das Zahnrad mit einer axial vorstehenden Profilierung zu versehen, die in der Einbaulage formschlüssig in Ausnehmungen der Mitnehmerscheibe eingepasst sind.

Für die mittels eines Tiefziehverfahrens hergestellte Mitnehmerscheibe bietet es sich an, diese außenseitig mit axial ausgerichteten Sicken zu versehen, die in der Einbaulage in Ausnehmungen oder Aussparungen des äußeren Lagerrings oder des Zahnrades bzw. eines mit dem Zahnrades einstückig verbundenen Ansatzes geführt sind.

Als ein weiteres geeignetes Mitnehmerprofil schließt die Erfindung weiterhin axial ausgerichtete Stifte des Zahnrades oder des Zahnkranzes ein, die in der Einbaulage in korrespondierende Aussparungen, Bohrungen, Durchstellungen, Durchprägungen oder Ausnehmungen der Mitnehmerscheibe eingreifen.

Eine spielfreie Einbaulage der Einbauscheibe, zur Vermeidung einer nachteiligen Geräuschentwicklung wird erfindungsgemäß mittels einer axial vorgespannten Mitnehmerscheibe erreicht. In der Vormontage ist die auf der Antriebswelle aufgepresste Mitnehmerscheibe geneigt ausgerichtet, wodurch die Mitnehmerscheibe in der Einbaulage kraftschlüssig an dem äußeren Lagerring des Stützlagers oder dem Zahnrad abgestützt ist.

Weiterhin schließt die Erfindung Mitnahmeprofile jeglicher Bauart ein, wie elastische Nasen, Aussparungen oder Stifte, die in Verbindung mit entsprechenden Gegenprofilen eine formschlüssige elastische Verbindung sicherstellen. Die Gestaltung dieser elastischen Mitnehmerprofile gewährleistet eine sichere Drehmomentübertragung von dem Zahnrad oder dem äußeren Lagerring des Stützlagers auf die Mitnehmerscheibe und der damit unmittelbar in Verbindung stehenden Antriebswelle.

### Kurze Beschreibung der Zeichnungen

In den Zeichnungen sind Ausführungsbeispiele der Erfindung dargestellt, die nachfolgend näher beschrieben werden. Es zeigen:
- Figur 1: den Aufbau einer erfindungsgemäßen Antriebsvorrichtung, bei der das Stützlager des Zahnrades unmittelbar mit dem Wälzlager der Antriebswelle in Verbindung steht;
- Figur 2: in einer Perspektive die erfindungsgemäße Antriebsvorrichtung gemäß Fig. 1 in Verbindung mit einer Antriebswelle;
- Figur 3: in einer vergrößerten Abbildung die Antriebsvorrichtung gemäß Figur 1 im Detail;
- Figur 4: eine der Figur 3 vergleichbare Abbildung mit einem abweichenden Mitnehmerprofil zwischen dem Zahnrad und der Mitnehmerscheibe;
- Figur 5: eine alternativ zu Figur 1 gestaltete Antriebsvorrichtung, bei der das Zahnrad über ein im Gehäuse eingesetztes Wälzlager abgestützt ist.

### Detaillierte Beschreibung der Zeichnungen

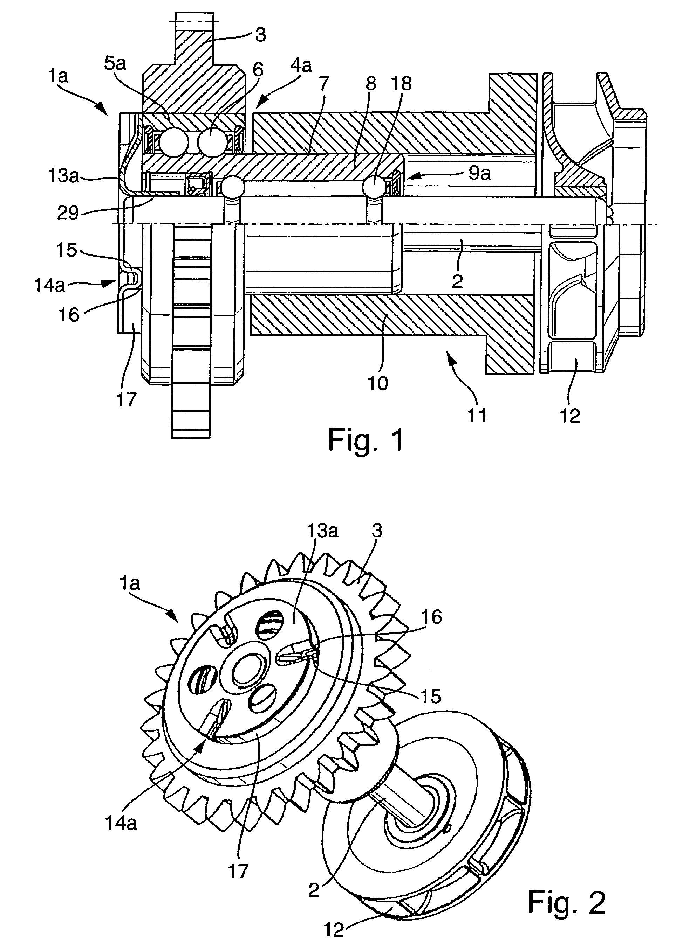

Die Figur 1 zeigt eine erfindungsgemäße Vorrichtung 1a zum Antrieb einer Antriebswelle 2. Die Vorrichtung 1 a steht dabei unmittelbar mit einem Antriebsglied 11, einer Wasserpumpe in Verbindung, deren Rotationskörper als Flügelrad 12 ausgebildet, für die Zirkulation eines Kühlmediums in einem Kühlmittelkreislauf der Brennkraftmaschine vorgesehen ist.

Die Vorrichtung 1a steht unmittelbar mit einem Zahnradtrieb in Verbindung, vorzugsweise einer Kurbelwelle, deren zugehöriges Zahnrad das Abtriebsglied bildet und das direkt oder mittels zwischengeschalteter weiterer Zahnräder mit einem Zahnrad 3der Vorrichtung 1a in Eingriff steht. Das gemäß Figur 1 einen Zahnkranz bildende Zahnrad 3 umschließt ein Stützlager 4a und ist dabei drehstarr mit einem äußeren Lagerring 5a des Stützlagers 4a verbunden. Zweireihig, parallel zueinander angeordnete Wälzkörper 6 des Stützlagers 4a sind innenseitig auf einer Mantelfläche 7 eines Lagerrings 8 des Wälzlagers 9a geführt, das zur Lagerung der Antriebswelle 2 in einem Gehäuse 10 bestimmt ist und das Wälzkörper 18 einschließt.

Die Vorrichtung 1 a umfasst weiterhin eine Mitnehmerscheibe 13a, die eine Drehmomentübertragung zwischen dem äußeren Lagerring 5a des Stützlagers 4a und der Antriebswelle 2 sicherstellt. Dazu ist die axial an dem äußeren Lagerring 5a abgestützte Mitnehmerscheibe 13a innenseitig über einen zylindrischen Bund mit einem Pressverband 29 kraftschlüssig an der Antriebswelle 2 befestigt. Ein elastisches Mitnehmerprofil 14a zwischen der Mitnehmerscheibe 13a und dem äußeren Lagerring 5a wird mittels axial ausgerichteter Sicken 15 der Mitnehmerscheibe 13a und Aussparungen 16 in einem axial vorstehenden Ansatz 17 des äußeren Lagerrings 5a realisiert.

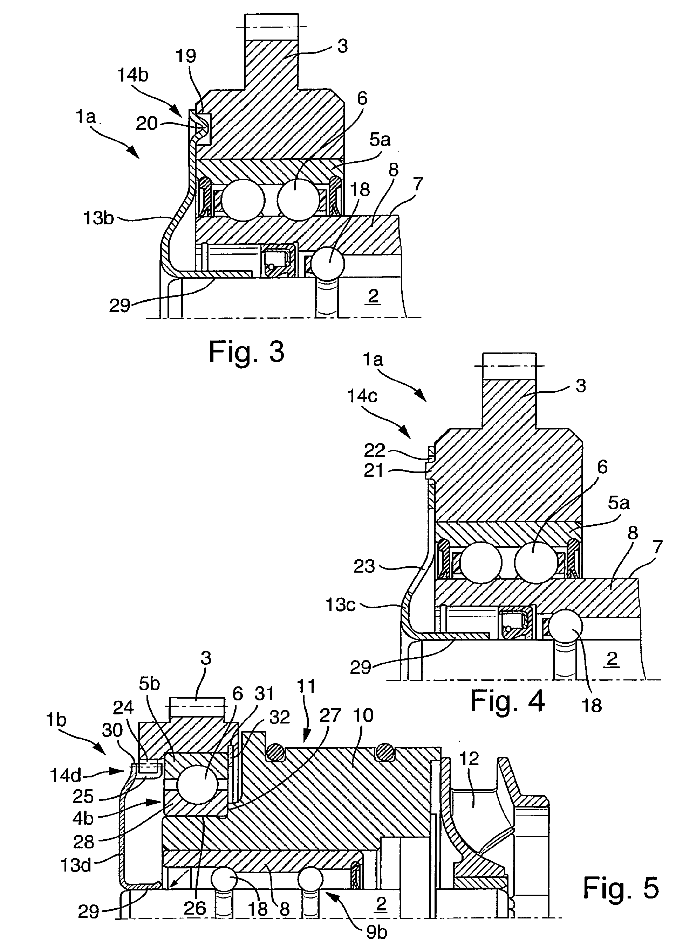

Die Figur 2 in der die Vorrichtung 1 a in einer Perspektive dargestellt ist verdeutlicht die Ausgestaltung des Mitnehmerprofils 14a zwischen dem einstückig mit dem äußeren Lagerring 5a in Verbindung stehenden axial vorstehenden Ansatz 17 und der Mitnehmerscheibe 13a. Die Vorrichtung 1 a ist dabei mit drei jeweils um 120° versetzt angeordneten Mitnehmerprofilen 14a versehen.

Die Figur 3 zeigt die Vorrichtung 1a in einer vergrößerten Darstellung, verbunden mit einem gegenüber Figur 1 alternativ ausgebildeten Mitnehmerprofil 14b. Die Mitnehmerscheibe 13b zeigt einen radial nach außen verlängerten Schenkel, der sich stirnseitig an dem Zahnrad 3 abstützt. Umfangsverteilt ist die Mitnehmerscheibe 13a mit einer axialen Durchstellung 20 versehen, die in der Einbaulage formschlüssig in radial ausgerichtete, der Breite der Durchstellung entsprechend angepasste Ausnehmungen 19 des Zahnrades 3 verrastet. Die Ausnehmung 19 ist maßlich so mit der Durchstellung 20 abgestimmt, dass diese in Umfangsrichtung passgenau eingesetzt sind. In radialer Richtung übertrifft die Längserstreckung der Ausnehmung 19 die Länge der Durchstellung 20, wodurch sich beispielsweise eine temperaturbedingte, abweichende Längenausdehnung zwischen der Mitnehmerscheibe 13a und dem Zahnrad 3 möglich ist.

In Figur 4 ist das Mitnehmerprofil 14c in Verbindung mit der Vorrichtung 1 a abgebildet. Das Mitnehmerprofil 14c umfasst einen axial vorstehenden, einstückig mit dem Zahnrad verbundenen Zapfen 21, der formschlüssig in eine Öffnung 22 der Mitnehmerscheibe 13c eingreift. Die maßliche Abstimmung zwischen dem Zapfen 21 und der Öffnung 22 des Mitnehmerprofils 14c entspricht dabei dem Mitnehmerprofil 14b. Eine gewünschte vergrößerte Elastizität der Mitnehmerscheibe 13c wird mittels radial ausgerichteter Schlitze 23 erreicht, die umfangsverteilt vorteilhaft versetzt jeweils zu dem Mitnehmerprofil 14c in die Mitnehmerscheibe 13c eingebracht sind.

Die Figur 5 zeigt das Antriebsglied 11, ebenfalls ausgeführt als Wasserpumpe, die zum Antrieb die Vorrichtung 1 b umfasst. Dabei umschließt das Zahnrad 3 das Stützlager 4b, dessen äußerer Lagerring 5b dem Zahnrad 3 und dessen innerer Lagerring 28 dem Gehäuse 10 des Antriebsglied 11 zugeordnet ist. Das Stützlager 4b ist über den inneren Lagerring 28 auf einem Ansatz 26 des Gehäuses 10 lagefixiert und erfährt einen Axialanschlag an der Schulter 27 des Gehäuses 10. Dieser Aufbau zeigt im Gegensatz zu Figur 1 zwei voneinander getrennte Wälzlagerungen für die Antriebswelle 2 und das Zahnrad 3. Zur Drehmomentübertragung von dem Zahnrad 3 auf die Antriebswelle 2 dient die Mitnehmerscheibe 13d. Diese über den Pressverband 29 mit der Antriebswelle 2 verbundene Mitnehmerscheibe 13d ist am Umfang mit dem Außenprofil 25 versehen, das in Verbindung mit dem Innenprofil 24 des Zahnrades 3 das Mitnehmerprofil 14d bildet. Das Innenprofil 24 ist an einem radial nach innen gerichteten Bord 30 des Zahnrades 3 angeformt, wobei der Bord 30 gleichzeitig einen Axialanschlag für den äußeren Lagerring 5b bildet. Auf der vom Bord 30 abgewandten Seite ist das Zahnrad 3 mit einer Ringnut 31 versehen, die zur Aufnahme eines Sicherungsrings 32 bestimmt ist, der die Einbaulage des äu-βeren Lagerrings 5b bestimmt.

### Bezugszahlen

- 1 a: Vorrichtung
- 1 b: Vorrichtung
- 2: Antriebswelle
- 3: Zahnrad
- 4a: Stützlager
- 4b: Stützlager
- 5a: Lagerring
- 5b: Lagerring
- 6: Wälzkörper
- 7: Mantelfläche
- 8: Lagerring
- 9a: Wälzlager
- 9b: Wälzlager
- 10: Gehäuse
- 11: Antriebsglied
- 12: Flügelrad
- 13a: Mitnehmerscheibe
- 13b: Mitnehmerscheibe
- 13c: Mitnehmerscheibe
- 13d: Mitnehmerscheibe
- 14a: Mitnehmerprofil
- 14b: Mitnehmerprofil
- 14c: Mitnehmerprofil
- 14d: Mitnehmerprofil
- 15: Sicke
- 16: Aussparung
- 17: Ansatz
- 18: Wälzkörper
- 19: Ausnehmung
- 20: Durchstellung
- 21: Zapfen
- 22: Öffnung
- 23: Schlitz
- 24: Innenprofil
- 25: Außenprofil
- 26: Ansatz
- 27: Schulter
- 28: Lagerring
- 29: Pressverband
- 30: Bord
- 31: Ringnut
- 32: Sicherungsring

## Patentansprüche

1. Vorrichtung zum Antrieb eines Aggregates einer Brennkraftmaschine, wobei ein Zahnradantrieb zwischen einem Abtriebsglied und dem anzutreibenden Aggregat, einem Antriebsglied (11) vorgesehen ist und das Aggregat ein ortsfest angeordnetes Gehäuse (10) eine wälzgelagerte Antriebswelle (2) einschließt, die mit zumindest einem Rotationskörper drehstarr verbunden ist, **dadurch gekennzeichnet, dass** die Vorrichtung (1a, 1b) ein die Antriebswelle (2) radial beabstandet umschließendes, mit einem Stützlager (4a, 4b) zusammenwirkendes, wälzgelagertes Zahnrad (2) umfasst, die dem Antriebsglied (11) zugeordnet ist und eine mit der Antriebswelle (2) verbundene Mitnehmerscheibe (13a bis 13d) mittelbar oder unmittelbar über ein elastisches Mitnehmerprofil (14a bis 14d) an dem Zahnrad (2) befestigt ist.

2. Vorrichtung nach Anspruch 1, die zum Antrieb eines als Wasserpumpe ausgeführten Antriebsglieds (11) vorgesehen ist, das für einen Kühlmittelkreislauf einer Brennkraftmaschine bestimmt ist.

3. Vorrichtung nach Anspruch 1, wobei die Mitnehmerscheibe (13a) eine Verbindung zwischen dem äußeren Lagering (5a) des Stützlagers (4a) und der Antriebswelle (2) sicherstellt.

4. Vorrichtung nach Anspruch 1, bei dem die Mitnehmerscheibe (13b bis 13d) außenseitig über das Mitnehmerprofil (14b bis 14d) mit dem Zahnrad (3) und innenseitig über einen Pressverband (29) mit der Antriebswelle (2) des Antriebsgliedes (11) verbunden ist.

5. Vorrichtung nach Anspruch 1, versehen mit einer aus Blech geformten Mitnehmerscheibe (13a bis 13d), die drehstarr, kraftschlüssig und / oder formschlüssig mit der Antriebswelle (2) verbunden ist und außenseitig formschlüssig an dem Zahnrad (3) oder dem äußeren Lagerring (5a) des Stützlagers (4a) befestigt ist.

6. Vorrichtung nach Anspruch 1, wobei das Zahnrad (3) über ein dem Gehäuse (10) des Antriebsgliedes (11) zugeordnetes Stützlager (4b) drehbar gelagert ist.

7. Vorrichtung nach Anspruch 6, deren Stützlager (4b) mit einem inneren Lagerring (28) auf einem stirnseitigen Ansatz (26) geführt und an einer Schulter (27) des Gehäuses (10) positioniert ist und deren äußerer Lagerring (5b) von dem Zahnrad (3) umschlossen ist.

8. Vorrichtung nach Anspruch 1, wobei das Stützlager (4a) des Zahnrades (3) unmittelbar mit einem zur Lagerung der Antriebswelle (2) in dem Gehäuse (10) bestimmten Wälzlager (9a) zusammenwirkt.

9. Vorrichtung nach Anspruch 8, bei dem Wälzkörper (6) des Stützlagers (4a) an einer Mantelfläche (7) eines dem Wälzlager (9a) zugeordneten Lagerring (8) geführt sind.

10. Vorrichtung nach Anspruch 1, mit einem als Zahnkranz gestalteten Zahnrad (3), der den äußeren Lagerring (5a, 5b) des Stützlagers (4a, 4b) umschließt und drehstarr mit dem Lagerring (5a, 5b) verbunden ist.

11. Vorrichtung nach Anspruch 1, die eine aus einem Federstahlblech hergestellte, vorzugsweise spanlos geformte Mitnehmerscheibe (13a bis 13d) umfasst.

12. Vorrichtung nach Anspruch 1, wobei die Mitnehmerscheibe (13d) gleichmäßig umfangsverteilt, vorzugsweise symmetrisch angeordnete, radial ausgerichtete Schlitze (23) oder Aussparungen aufweist.

13. Vorrichtung nach Anspruch 1, wobei ein Außenprofil (25) der Mitnehmerscheibe (13d) mit einem korrespondierenden Innenprofil (24) des Zahnrades (3) das Mitnehmerprofil (14d) bildet, dass in einer Einbaulage zu dem Stützlager (4b) axial versetzt angeordnet ist.

14. Vorrichtung nach Anspruch 1, bei der zur Darstellung des Mitnehmerprofils (14c) das Zahnrad (3) eine axial vorstehende Profilierung, zumindest einen Zapfen (21) einschließt, der formschlüssig in eine Öffnung (22), Ausnehmungen oder Aussparung der Mitnehmerscheibe (13c) eingepasst ist.

15. Vorrichtung nach Anspruch 1, wobei als Mitnehmerprofil (14a) die Mitnehmerscheibe (13a) zumindest eine axial in Richtung des Stützlagers (4a) ausgerichtete Sicke (15) umfasst, die in der Einbaulage in eine Aussparung (16) des äußeren Lagerrings (5a) oder des Zahnrades (3) geführt ist.

16. Vorrichtung nach Anspruch 1, mit einem Mitnehmerprofil, das axial ausgerichtete Stifte einschließt, die der Mitnehmerscheibe (13a bis 13d) oder dem Zahnrades (3) zugeordnet, in der Einbaulage in korrespondierende Aussparungen des jeweils zugehörigen anderen Bauteils eingreifen.

17. Vorrichtung nach Anspruch 1, deren drehstarr mit der Antriebswelle (2) verbundene Mitnehmerscheibe (13a bis 13d) in der Einbaulage axial vorgespannt an dem Zahnrad (2) oder dem äußeren Lagerring (5a, 5b) des Stützlagers (4a, 4b) abgestützt ist.

18. Vorrichtung nach Anspruch 1, wobei das Mitnehmerprofil (14a bis 14d) elastische Nasen, Ansätze oder Stifte einschließt, die mit Öffnungen, Bohrungen oder Aussparungen zusammenwirken, zur Erzielung einer formschlüssigen Verbindung, und sicheren Drehmomentübertragung von dem Zahnrad (3) oder dem äußeren Lagerring (5a, 5b) des Stützlagers (4a, 4b) auf die Mitnehmerscheibe (13a bis 13d).

## Claims

1. Device for driving a unit of an internal combustion engine, a gear drive being provided between an output element and the unit to be driven, a driven element (11), and the unit including a fixed housing (10) and a rolling bearing-mounted drive shaft (2) which is connected non-rotatably to at least one rotating body, **characterized in that** the device (1a, 1b) includes a rolling bearing-mounted gear wheel (3) which surrounds the drive shaft (2) at a radial distance therefrom and which cooperates with a support bearing (4a, 4b), which gear wheel (3) is associated with the driven element (11), and a driver disc (13a to 13d) connected to the drive shaft (2) is fixed directly, or indirectly via an elastic driver profile (14a to 14d), to the gear wheel (3).

2. Device according to Claim 1, which is provided for driving a driven element (11) in the form of a water pump provided for a coolant circuit of an internal combustion engine.

3. Device according to Claim 1, wherein the driver disc (13a) provides a connection between the outer bearing cup (5a) of the support bearing (4a) and the drive shaft (2).

4. Device according to Claim 1, wherein the driver disc (13b to 13d) is connected on the outside to the gear wheel (3) via the driver profile (14b to 14d) and on the inside to the drive shaft (2) of the driven element (11) via a press fit (29).

5. Device according to Claim 1, provided with a driver disc (13a to 13d) formed from sheet metal, which is connected non-rotatably by a non-positive and/or positive fit to the drive shaft (2) and is fixed on the outside by a positive fit to the gear wheel (3) or to the outer bearing cup (5a) of the support bearing (4a).

6. Device according to Claim 1, wherein the gear wheel (3) is mounted rotatably via a support bearing (4b) associated with the housing (10) of the driven element (11).

7. Device according to Claim 6, the support bearing (4b) of which has an inner bearing cup (28), is guided on an end projection (26) and is positioned against a shoulder (27) of the housing (10), and the outer bearing cup (5b) of which device is surrounded by the gear wheel (3).

8. Device according to Claim 1, wherein the support bearing (4a) of the gear wheel (3) cooperates directly with a rolling bearing (9a) provided for mounting the drive shaft (2) in the housing (10).

9. Device according to Claim 8, wherein rolling bodies (6) of the support bearing (4a) are guided on a lateral surface (7) of a bearing cup (8) associated with the rolling bearing (9a).

10. Device according to Claim 1, having a gear wheel (3) in the form of a toothed ring which surrounds the outer bearing cup (5a, 5b) of the support bearing (4a, 4b) and is connected non-rotatably to the bearing cup (5a, 5b).

11. Device according to Claim 1, which includes a driver disc (13a to 13d) made from a spring steel sheet, preferably without machining.

12. Device according to Claim 1, wherein the driver disc (13d) has radially oriented slots (23) or recesses which are uniformly distributed circumferentially and are preferably arranged symmetrically.

13. Device according to Claim 1, wherein an outer profile (25) of the driver disc (13d) forms with a corresponding inner profile (24) of the gear wheel (3) the driver profile (14d), which is arranged with an axial offset with respect to the support bearing (4b) in an assembled position.

14. Device according to Claim 1, wherein, in order to represent the driver profile (14c), the gear wheel (3) has an axially projecting profiling comprising at least one peg (21), which engages in a form-fitting manner in an opening (22), apertures or a recess of the driver disc (13c).

15. Device according to Claim 1, wherein the driver disc (13a) includes as the driver profile (14a) at least one bead (15) oriented axially in the direction of the support bearing (4a), which bead (15) is guided in the assembled position into a recess (16) of the outer bearing cup (5a) or of the gear wheel (3).

16. Device according to Claim 1, having a driver profile which includes axially aligned pins which are associated with the driver disc (13a to 13d) or with the gear wheel (3) and engage in the assembled position in corresponding recesses of the respective associated other component.

17. Device according to Claim 1, the driver disc (13a to 13d) of which, connected non-rotatably to the drive shaft (2), is preloaded axially against the gear wheel (2), or is supported against the outer bearing cup (5a, 5b) of the support bearing (4a, 4b), in the assembled position.

18. Device according to Claim 1, wherein the driver profile (14a to 14d) includes elastic dogs, projections or pins which cooperate with openings, bores or recesses to provide a form-fitting connection and secure transmission of torque from the gear wheel (3) or the outer bearing cup (5a, 5b) of the support bearing (4a, 4b) to the driver disc (13a to 13d).

## Revendications

1. Dispositif pour entraîner un organe d'un moteur à combustion interne, sachant qu'un entraînement à engrenage est prévu entre un élément de sortie et l'organe à entraîner, à savoir un élément menant (11), et que l'organe inclut un carter (10) disposé stationnairement et un arbre d'entraînement (2) monté sur roulement, qui est lié en rotation à au moins un corps de révolution, **caractérisé en ce que** le dispositif (1a, 1b) comprend une roue d'engrenage (3) montée sur roulement, laquelle entoure à distance radiale l'arbre d'entraînement (2), coopère avec un palier de soutien (4a, 4b) et est associée à l'élément menant (11), et un disque entraîneur (13a à 13d) relié à l'arbre d'entraînement (2) est fixé sur la roue d'engrenage (3) directement ou indirectement au moyen d'un profil entraîneur élastique (14a à 14d).

2. Dispositif selon la revendication 1, qui est prévu pour entraîner un élément menant (11) réalisé sous forme de pompe à eau et destiné à un circuit de refroidissement d'un moteur à combustion interne.

3. Dispositif selon la revendication 1, sachant que le disque entraîneur (13a) assure une liaison entre la bague de palier extérieure (5a) du palier de soutien (4a) et l'arbre d'entraînement (2).

4. Dispositif selon la revendication 1, selon lequel le disque entraîneur (13b à 13d) est relié sur le côté extérieur à la roue d'engrenage (3) par l'intermédiaire du profil entraîneur (14b à 14d), et sur le côté intérieur à l'arbre d'entraînement (2) de l'élément menant (11) par l'intermédiaire d'une liaison pressée (29).

5. Dispositif selon la revendication 1, pourvu d'un disque entraîneur (13a à 13d) façonné en tôle qui est lié en rotation par adhérence et/ou par engagement positif à l'arbre d'entraînement (2) et qui, sur le côté extérieur, est fixé par engagement positif sur la roue d'engrenage (3) ou sur la bague de palier extérieure (5a) du palier de soutien (4a).

6. Dispositif selon la revendication 1, sachant que la roue d'engrenage (3) est montée à rotation au moyen d'un palier de soutien (4b) associé au carter (10) de l'élément menant (11).

7. Dispositif selon la revendication 6, dont le palier de soutien (4b) est, par une bague de palier intérieure (28), guidé sur un appendice frontal (26) et positionné sur un épaulement (27) du carter (10), et dont la bague de palier extérieure (5b) est entourée par la roue d'engrenage (3).

8. Dispositif selon la revendication 1, sachant que le palier de soutien (4a) de la roue d'engrenage (3) coopère directement avec un palier à roulement (9a) destiné au montage de l'arbre d'entraînement (2) dans le carter (10).

9. Dispositif selon la revendication 8, selon lequel des éléments roulants (6) du palier de soutien (4a) sont guidés sur une face d'enveloppe (7) d'une bague de palier (8) associée au palier à roulement (9a).

10. Dispositif selon la revendication 1, avec une roue d'engrenage (3) réalisée sous forme de couronne dentée, qui entoure la bague de palier extérieure (5a, 5b) du palier de soutien (4a, 4b) et est liée en rotation à la bague de palier (5a, 5b).

11. Dispositif selon la revendication 1, qui comprend un disque entraîneur (13a à 13d) fabriqué à partir d'une tôle d'acier à ressorts, de préférence formé sans enlèvement de matière.

12. Dispositif selon la revendication 1, sachant que le disque entraîneur (13d) présente des fentes (23) ou échancrures orientées radialement qui sont uniformément réparties sur la circonférence, de préférence symétriquement disposées.

13. Dispositif selon la revendication 1, sachant qu'un profil extérieur (25) du disque entraîneur (13d) forme avec un profil intérieur correspondant (24) de la roue d'engrenage (3) le profil entraîneur (14d) qui, en position de montage, est disposé en étant décalé axialement par rapport au palier de soutien (4b).

14. Dispositif selon la revendication 1, selon lequel, afin de constituer le profil entraîneur (14c), la roue d'engrenage (3) inclut un profilage dépassant axialement, à savoir au moins un tenon (21), qui est encastré en engagement positif dans une ouverture (22), un évidement ou une échancrure du disque entraîneur (13c).

15. Dispositif selon la revendication 1, sachant que, comme profil entraîneur (14a), le disque entraîneur (13a) comprend au moins une moulure (15) qui est orientée axialement en direction du palier de soutien (4a) et qui, dans la position de montage, est guidée dans une échancrure (16) de la bague de palier extérieure (5a) ou de la roue d'engrenage (3).

16. Dispositif selon la revendication 1, avec un profil entraîneur qui inclut des broches orientées axialement qui sont associées au disque entraîneur (13a à 13d) ou à la roue d'engrenage (3) et qui, dans la position de montage, s'engagent dans des échancrures correspondantes de l'autre élément respectivement associé.

17. Dispositif selon la revendication 1, dont le disque entraîneur (13a à 13d) lié en rotation à l'arbre d'entraînement (2) est, dans la position de montage, soutenu en étant axialement précontraint sur la roue d'engrenage (3) ou sur la bague de palier extérieure (5a, 5b) du palier de soutien (4a, 4b).

18. Dispositif selon la revendication 1, sachant que le profil entraîneur (14a à 14d) inclut des broches, appendices ou ergots élastiques, qui coopèrent avec des ouvertures, perçages ou échancrures afin d'obtenir une liaison positive et une transmission de couple fiable depuis la roue d'engrenage (3) ou la bague de palier extérieure (5a, 5b) du palier de soutien (4a, 4b) sur le disque entraîneur (13a à 13d).
